# EUROPEAN PATENT APPLICATION

(11) **EP 3 370 124 A1**
(43) Date of publication of application: **05.09.2018**
(21) Application number: 17158738.9
(22) Date of filing: 01.03.2017
(51) Int. Cl.: G05B 19/042

(54) **ENSURING INTERFACE CONFORMITY IN A MODULAR PROCESS CONTROL SYSTEM**

(71) Applicant: ABB Schweiz AG, 5400 Baden (CH)
(72) Inventor: HOERNICKE, Mario, 76829 Landau (DE)
(74) Representative: Helin, William

(57) **Abstract**

The invention is concerned with an interface conformity ensuring device for a process control system and a method and a computer program product for ensuring interface conformity of a process control module to be provided for controlling a process control system section. The method is performed by the device and comprises obtaining (200), from a user, information of process functions required in a process control module, adding (210) parameters required by the functions, obtaining (220), from the user, a selection of process structure elements to be visualized by the module during control of the process control section, receiving(225), from the user, a selection of a target system, creating (260), based on the target system selection, control blocks for the equipment in the process structure and generating (235) at least one interfacing object aimed at the target system comprising a number of communication interfaces corresponding to the function parameters and control blocks.

## Description

### FIELD OF THE INVENTION

The present invention generally relates to process control systems. More particularly the present invention relates to an interface conformity ensuring device for a process control system as well as to a method and a computer program product for ensuring interface conformity of a process control module to be provided for controlling a process control system section.

### BACKGROUND

A process control system may be provided in an industrial plant. Such a system may comprise a number of process control modules, where each process control module is concerned with the control of a section of the process control system.

The basic idea of modular plants is to create the overall functionality of the plant by assembling the plant from different modules. Every module has its own automation system (maybe from different vendors) but describes the interfaces to control the automation system from a process control system that is laying on top of the various modules. These interfaces are at the moment standardized in the German community and will be standardized as an IEC standard. In order to have a seamless integration of the modules, every module has to comply with the standard interfaces and thus has to ensure that the interfaces are in conformance with the standard.

The major technical problem that needs to be addressed by every vendor of module automation systems is to ensure that the automation systems interfaces comply with the standard. Usually, the description of the interfaces is exported from an engineering tool of the controller. Since most companies have a range of controllers that could potentially be used for module automation, every engineering tool for every controller needs to implement this export functionality. Thus, high effort is required to export the interfaces description if one wants to provide a scalable solution for module automation. In other cases, it is focused on a single controller, which means, not the entire module market could be addressed, because of limited scalability. Furthermore, today engineering tools are not made for exporting, e.g. the visualization of the process. Creating the visualization for the process is basically painting a picture, but for the interfaces the connections between the graphical object, e.g. a pipe and a valve is required. This information is hard to obtain from the engineering tools of the controller. Another problem is that the module vendors need to learn every engineering tool just to create the visualization and the module interfaces.

Here a middleware would be of advantage, as well, since the module vendors could simply describe the predecessor-successor relationship of the equipment, without having to fully describe the visualization that is later anyway imported and changed in the overlaying process control system. Thus, a middleware, that is easy to use, only provides the necessary feature for the module engineer and that ensures interface compliance may be required.

Some efforts have been made in the field of system interoperability. US 2016/0224001 does for instance disclose a method for facilitating use of function blocks for first applications complying to a first standard in second applications complying with a second standard. The first function block has a first interface and is created by use of a first tool compliant with a first standard. In order to facilitate said use, there is created a platform independent model (PIM) for the second application with a second tool compliant with the second standard, which second function block comprises the first interface and an event interface. This is followed by creating a platform definition model of the first controller for the second application to form a first controller configuration and creating a platform specific model for the second application

However, there is still room for improvement.

### SUMMARY OF THE INVENTION

The present invention addresses the problem of providing a middleware that ensures interface conformity between modules and overall control.

According to a first aspect of the invention this object is more particularly achieved through an interface conformity ensuring device for a process control system that is to comprise different modules for controlling different process control system sections, the interface conformity ensuring device being configured to:
- obtain, from a user, information of process functions required in a process control module,
- add parameters required by the functions,
- obtain, from the user, a selection of process structure elements to be visualized by the module during control of the process control section,
- receive, from the user, a selection of a target system,
- create, based on the target system selection, control blocks for the equipment in the process structure, and
- generate at least one interfacing object aimed at the target system comprising a number of communication interfaces corresponding to the function parameters and control blocks.

This object is according to a second aspect of the invention achieved through a method for ensuring interface conformity of a process control module to be provided for controlling a process control system section.

The method is performed by interface conformity ensuring device and comprises:
- obtaining, from a user, information of process functions required in a process control module,
- adding parameters required by the functions,
- obtaining, from the user, a selection of process structure elements to be visualized by the module during control of the process control section,
- receiving, from the user, a selection of a target system,
- creating, based on the target system selection, control blocks for the equipment in the process structure, and
- generating at least one interfacing object aimed at the target system comprising a number of communication interfaces corresponding to the function parameters and control blocks.

This object is according to a third aspect of the invention solved through a computer program product for ensuring interface conformity of a process control module to be provided for controlling a process control system section. The computer program product is provided on a data carrier comprising computer program code configured to cause a interface conformity ensuring device to, when the computer program code is loaded into the interface conformity ensuring device:
- obtain, from a user, information of process functions required in a process control module,
- add parameters required by the functions,
- obtain, from the user, a selection of process structure elements to be visualized by the module during control of the process control section,
- receive, from the user, a selection of a target system,
- create, based on the target system selection, control blocks for the equipment in the process structure, and
- generate at least one interfacing object aimed at the target system comprising a number of communication interfaces corresponding to the function parameters and control blocks.

The present invention has a number of advantages. It provides a middleware that is easy to use, only provides the necessary feature for the user and that ensures interface compliance.

### BRIEF DESCRIPTION OF THE DRAWINGS

The present invention will in the following be described with reference being made to the accompanying drawings, where
Fig. 1 schematically shows a process control system comprising process control devices in three different modules,
Fig. 2 schematically shows one way of realizing an interface conformity ensuring device for use in generation of communication interfaces for one of the modules,
Fig. 3 schematically shows another way of realizing the interface conformity ensuring device,
Fig. 4 shows a function description of the functions in the module,
Fig. 5 shows a logic diagram depicting the logical dependencies of the variables in the functions of the module,
Fig. 6 schematically shows a process structure of the module,
Fig. 7 shows a function a code description and a process structure description in a proprietary format for the above-mentioned functions and process structure,
Fig. 8 schematically shows the generation of a function code description and process structure description as well as the generation of a communication object with communication interfaces based on the process function definitions, process structure description and the logical dependencies,
Fig. 9 schematically shows the generation of an interface description according to a communication standard based on the communication definitions, process structure definitions and process function definitions and function dependencies,
Fig. 10 schematically shows an example of a process graphics part of the interface description,
Fig. 11 shows an example of a communication part of the interface description,
Fig. 12 shows an example of an interlocks parts of the interface description,
Fig. 13 shows a flow chart of a number of method steps in a method of ensuring interface conformity being performed in the interface conformity device, and
Fig. 14 shows a data carrier with computer program code, in the form of a CD-ROM disc, for performing the steps of the method.

### DETAILED DESCRIPTION OF THE INVENTION

In the following, a detailed description of preferred embodiments of an interface conformity ensuring device as well as a method and a computer program product for ensuring interface conformity in a process control system will be given.

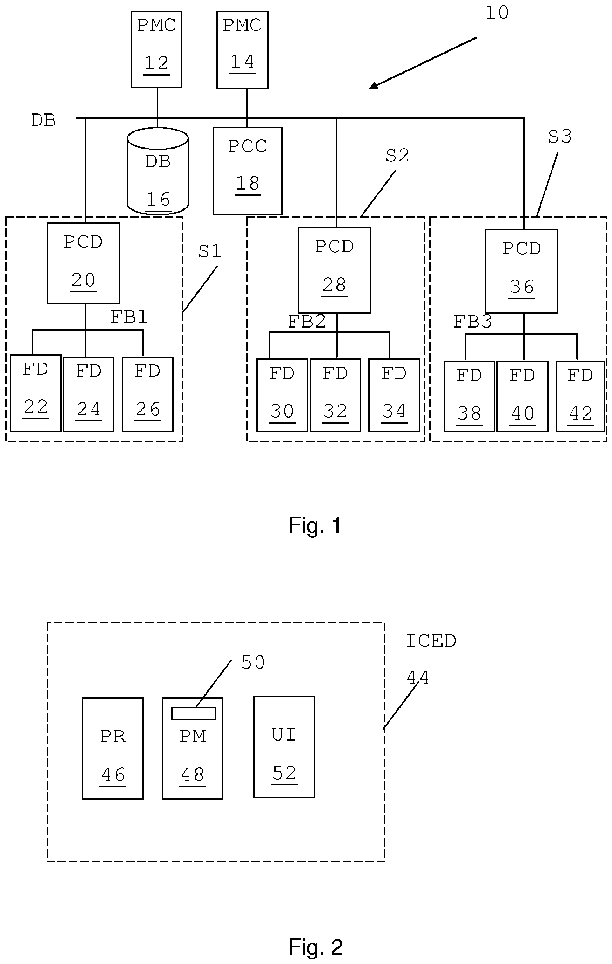

Fig. 1 schematically shows a process control system 10, which may be provided in the premises of an industrial plant. The process control system 10 is a computerized process control system for controlling an industrial process. Examples of industrial processes that may be controlled are electrical power generation, transmission and distribution processes, water purification and distribution processes, oil and gas production and distribution processes, petrochemical, chemical, pharmaceutical and food processes, and pulp and paper production processes. These are just some examples of processes where the system can be applied. There exist countless other industrial processes. The processes may also be other types of industrial processes such as the manufacturing of goods. A process may be monitored through one or more process monitoring computers, which communicate with a computer or server handling monitoring and control of the process.

In fig. 1 the process control system 10 therefore includes a number of process monitoring computers (PMC) 12 and 14. These computers may here also be considered to form operator terminals and are connected to a first data bus DB. There is also a process control computer PCC 18 and a database (DB) 16 connected to the first data bus DB. To this first data bus DB there is also connected a first, second and third local process control device (PCD) 20, 28 and 36. A local process control device PCD may be a device, such as a controller, that is responsible to perform local control, such as control in a module of the control system 10. The process control computer 18 may in this case be responsible for overall control of the process, where the process control devices 20, 28 and 36 are responsible for local control in the respective section. Each local process control device PCD is thus connected to a corresponding group of field devices via a field bus FB.

In the example in fig. 1, there is a first section S1 in whihc the first local process control device 20 is connected to a first group of field devices 22, 24 and 26 via a first field bus FB1. There is also a second section S2, in which the second local process control device 28 is connected to a second group of field devices 30, 32 and 34 via a second field bus FB2. Furthermore, there is also a third section S3, in which the third local process control device 36 is connected to a third group of field devices 30, 32 and 34 via a third field bus FB2. A field device is physical n interface to a process being controlled. A field device is therefore an interface, such as a sensor, via which measurements of the process are being made or an interface, such as an actuator, to which control commands are given for influencing the process. A field device may also be a combined sensor and actuator. A field device may as an example be a tank and another as an example a valve. The local process control devices 20, 28 and 38 may be involved in controlling the process in the corresponding section based on inputs from field devices, such as from sensors, and actuating the same or other field devices, such as valves based on the inputs. The process control computer 18 may in turn be involved in control of the different modules. Here it should also be mentioned that it is possible the control functionality performed by the local process control devices may in fact also be provided in the process control computer.

The control functionality for such a section may be provided through a process control module.

In the designing of the control functionality being performed in the control system in both the local process control devices and in the process control computer, one or more engineering terminals may be used. An engineering terminal may be a stand-alone computer that is used to generate computer program code that implements the process control functionality and this code will then implement the functionality when being implemented on a local process control device or the process control computer.

One engineering terminal used to provide a middleware in relation to a target system engineering terminal may according to aspects of the invention be an interface conformity ensuring device. Here a target system engineering terminal may be an engineering terminal on which a target system, which may be the control system of one of the process control modules, is set up.

Fig. 2 shows one way of realizing the interface conformity ensuring device. The interface conformity ensuring device ICED 44 may be realized as a computer comprising a processor (PR) 46 with program memory (PM) 48 comprising a computer program 50 with computer program code implementing the functionality of the interface conformity ensuring device 44. The interface conformity ensuring device 44 may also comprise a user interface (UI) 52 for instance in the form of a display and mouse/keyboard combination.

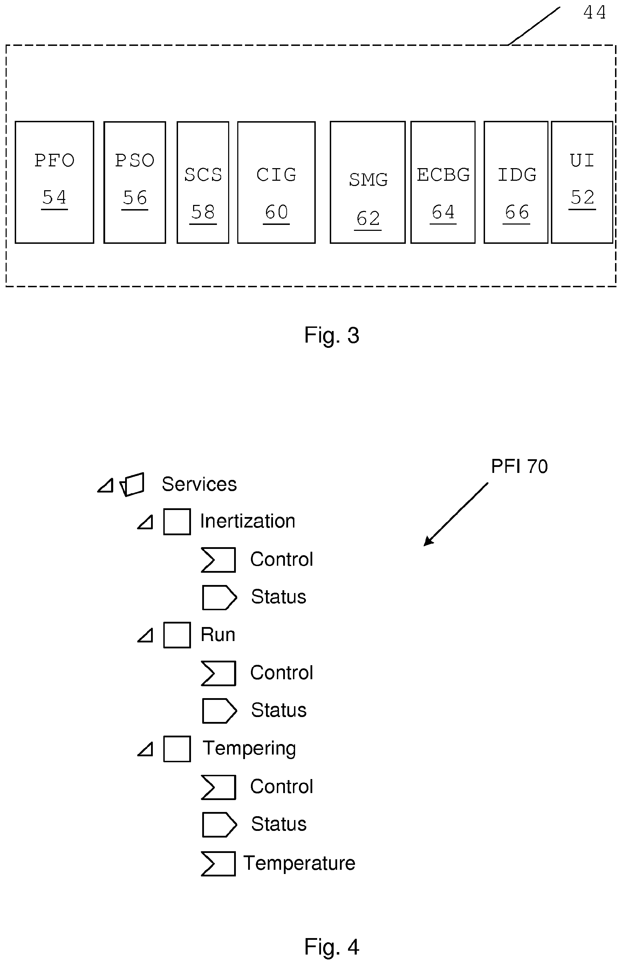

Another way of realizing the interface conformity ensuring device 44 is shown in fig. 3. The interface conformity ensuring device 44 may comprise a process function obtaining unit PFO 54, a process structure obtaining unit PSO 56, a system communication structure unit 58, a communication interfaces generating unit CIG 60, a state machine generating unit SMG 62, an equipment control block generating unit ECBG 64 and an interface description generating unit IDG 66 in addition to the user interface (UI) 52. It is here possible that these units 54 - 55 are provided through software code in a computer program memory together with a processor for running this code. As an alternative the units may be provided in the form of one or more dedicated circuits such as such as Field-Programmable Gate Arrays (FPGAs) or Application Specific Integrated Circuits (ASICs).

In the system in fig. 1 it is possible that three different process control modules are provided for the different sections S1, S2 and S3modules M1, m2 and M3, each being supplied by different control system vendors. This means that the various local process control devices 20, 28 and 36 and local field devices 22, 24, 26, 30, 32, 34, 38, 40 and 42 may here have been provided by different control system suppliers. It is for instance possible that the first local process control device 20 and the first group of field devices 22, 24 and 26 are supplied by a first supplier, that the second local process control device 28 and the second group of field devices 30, 32 and 34 are provided by a second supplier and that the that the third local process control device 36 and the third group of field devices 38, 40 and 42 are provided by a third supplier-. It is furthermore possible that the overall process control computer 18 is supplied by one of the above-mentioned or a further supplier. It is thereby also possible that the computer program implementing the control functionality may differ between modules implementing the control functionality of the sections as well as between a module and the overall control.

In this case the computer program code used for implementing the functionalities of the different modules may be proprietary. Therefore, it is necessary that the module code has interfaces according to a defined communication standard with which the other modules that implement the control code for the other sections and the overall all control functionality can communicate with the first module. Moreover a module may also need a description in a standardised format that describes the control functionality.

This is today essentially a manual labour task. It would therefore be of interest to simplify it through automating at least some of the activities carried out when generating the communication interfaces and module description.

Aspects of the invention are directed toward solving this problem.

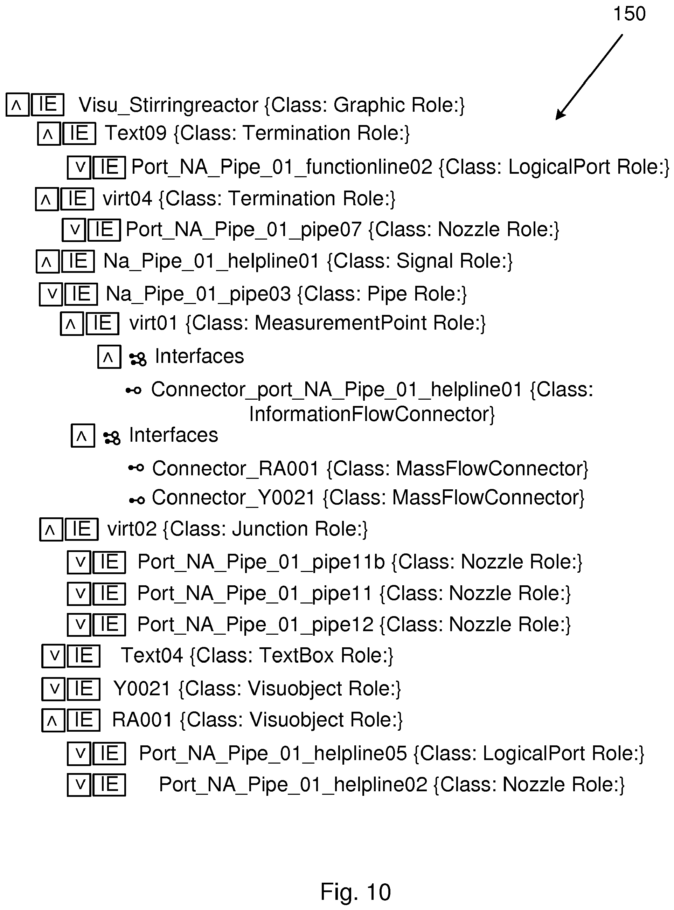

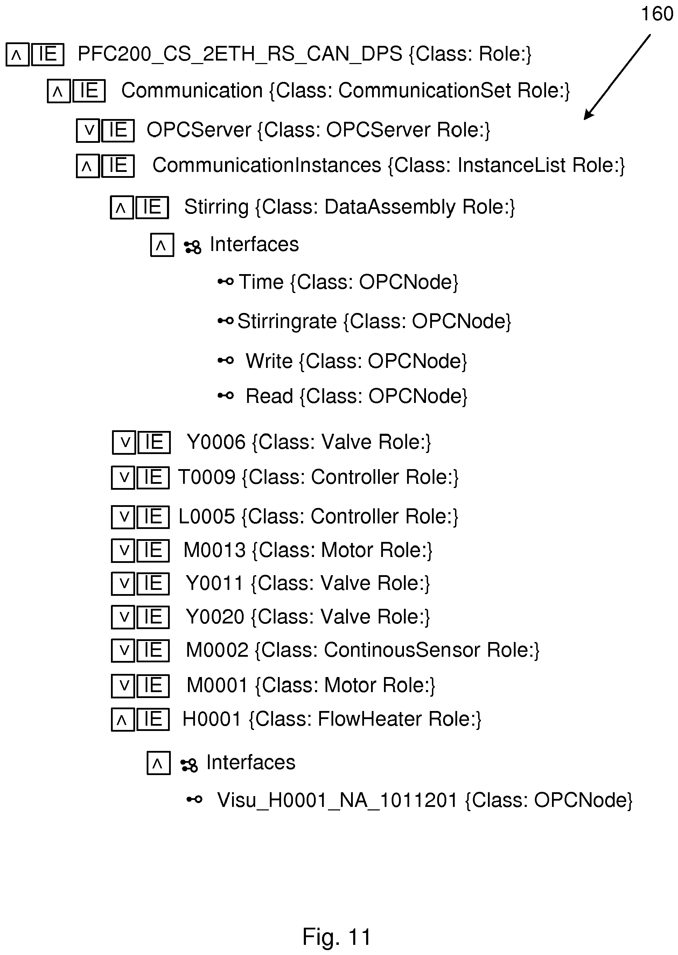

These aspects will now be described with reference being made to fig. 4 - 13.

The interface conformity ensuring device 44 provides a middleware that is used to describe target system independent interfaces of a module. The module that is provided by the interface conformity ensuring device 44 thereby comprises computer code defining the control functions and process structure of the process control system in a corresponding process control section. This module is thereby also an automation system module. Moreover, the interface conformity ensuring device 44 automatically generates target system dependent interfaces, communication and parts of the control code, where the generation of the target system dependent interfaces may be the system interfaces of the proprietary software used to build the module control functionality and process structure and. This may be done through two separate activities a) for the creation of the target system specific interfaces in the engineering tool where the target system is being created and b) the creation of the interface description to be used for seamless integration into the process control system of the entire modular plant, i.e. for informing with the other modules and overall control functionality.

The first group of mentioned activities will now be described with reference being made to fig. 4 - 8 and 13.

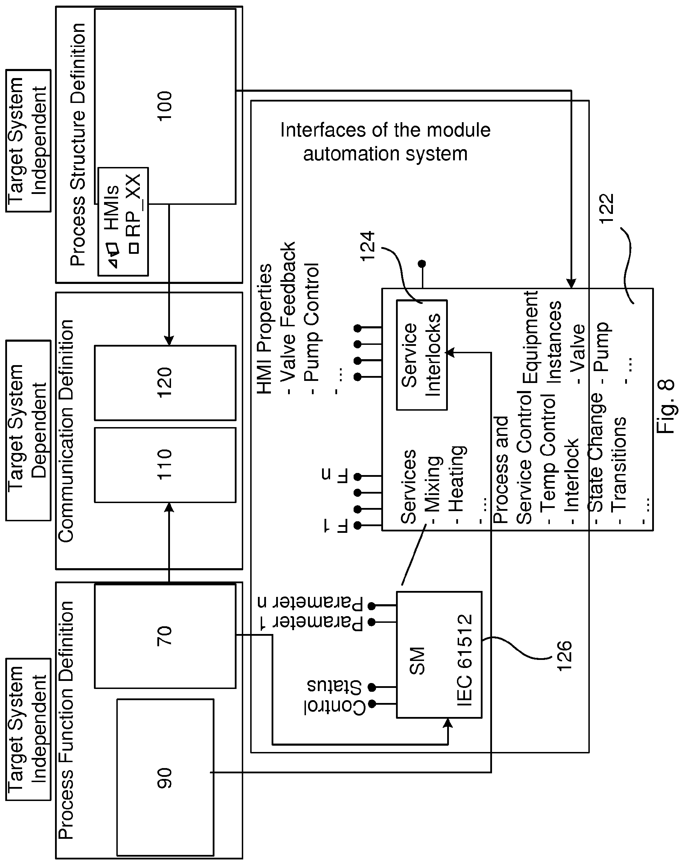

The method may start with the process function obtaining unit 54 obtaining from a user via the user interface 52, information about the process functions required in the process module, step 200. The user, which may be a system engineer, may define which process functions are required within the module. These might be for example mixing, tempering or inertization of the module. The user thus provides process function information PFI 70, which may be done in a process function definition area shown in fig. 8.

These function definitions may, as is shown in fig. 4, be made through the user opening a folder Services and there place a number of functions, where each such function is a selected a function that is to be used by the module. The user may here select a function and give it a number and a name. Thereafter parameters required by the functions are added, step 210. Two parameters may be automatically added by the process function obtaining unit 54 as a Control parameter and a Status parameter. Each process may thus be provided with these parameters by the function obtaining unit 54, triggered by the user selecting the functions. All required process functions may then simply be added to the folder and do not need any more configuration. In the example there are three such selected, added and named functions Inertization, Run and Tempering, each being provided with the parameters Control and Status by the process function obtaining unit 54. Here Control is an input to the function and the parameter Status is an output generated as a response to the parameter Control.

The parameters being added may also comprise parameters being added by the user. The user may thus add, under the control of the process function obtaining unit 54, any parameters that are required by the various process functions. Besides the process functions, the required parameters are thus added by the user. For the shown Tempering function, the temperature may be needed to be used in the process control during runtime. Therefore a service parameter may need to be exposed by the module. This is in fig. 4 shown by the Tempering function receiving the parameter Temperature.

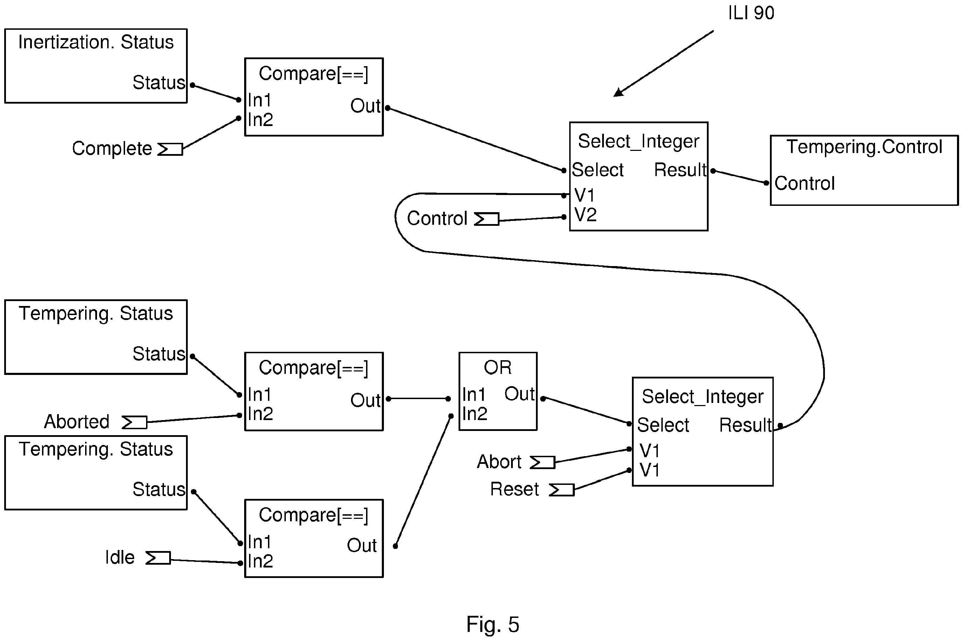

Thereafter the process function obtaining unit 54 obtains dependencies between the process function parameters, step 215. It is thus possible that the process functions of the module have to be interlocked, i.e. not be allowed to occupy certain states simultaneously, so that the states may need to be defined as mutually exclusive. For instance, if there is a heating function and a cooling function for the module, those may not be allowed to run at the same time. The user or engineer can describe the interlock using function block diagrams, for instance using IEC 61131-3 or some similar functions to assure that these services are not executed at the same time. This may be done in the process function definition area shown in the left side of fig. 8. As is schematically shown in fig. 5, which shows interlock information being defined by the user via the process functions obtaining unit 54 and the user interface 52 in an exemplifying function block diagram FBD 90. It can in the example of fig. 5 be seen that the parameter Status of the Tempering function is compared with the parameter Status of the function block Inertization and not allowed to be performed unless the Status of the Inertization is completed. Thereby interlock data is obtained.

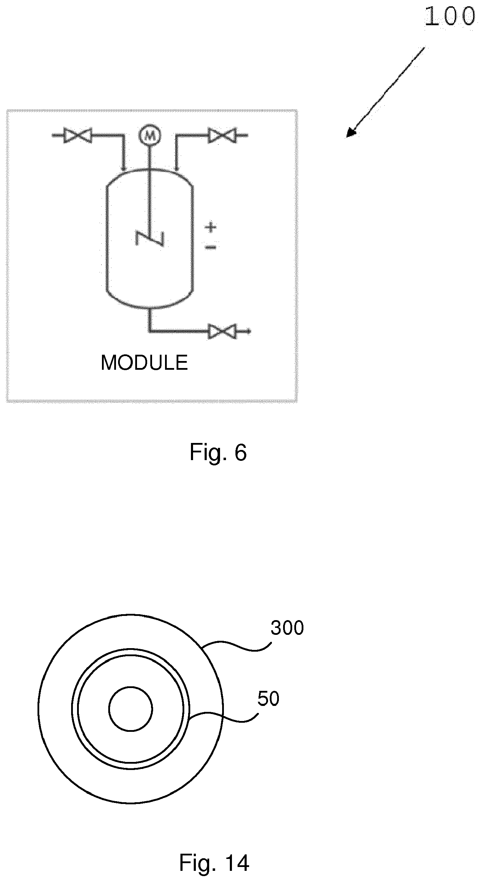

Thereafter, the process structure obtaining unit 56 may obtain, from the user via the user interface 54 in a process structure definition area, see the left side of fig. 8, process structure information, step 220. The obtaining of the process structure may comprise receiving from the user, a selection of process structure elements such as machines to be involved in the control. Moreover, the process structure of the module may be defined by the user in the form of process graphics. The user may in this case insert, for every piece of equipment that is to be used by the module, a symbol in a process structure definition part 100 of the middleware. The symbols may be connected, which is shown in fig. 6, with simple lines and thereby, the process structure is defined. In the example of fig. 6 the module is shown as comprising two valves leading into a tank, in which tank there is a mixer operated by a motor. There is also a pipe leaving the tank comprising a further valve.

The inserted objects may, by the process s structure forming unit 56 and based on the objects interconnected by the user, be placed in a tree structure of Human Machine Interface (HMI) objects in the view. Every used piece of equipment may get a tag name. If the user wants to describe e.g. different levels of detail in the process structure, those may be added as new objects in the tree and the same procedure can be applied.

In order to generate an interfacing object, the interface conformity ensuring device may receive, a selection of a target system from the user, via the user interface, step 225. The target system may in this case be the control system of a particular vendor that is to be implemented in the module. The target system may thus be a proprietary control device or controller to be used for implementing the control functionality of the module. Moreover, the vendor may also have a number of machines dedicated to the type of functionality provided by the above-defined types of functions.

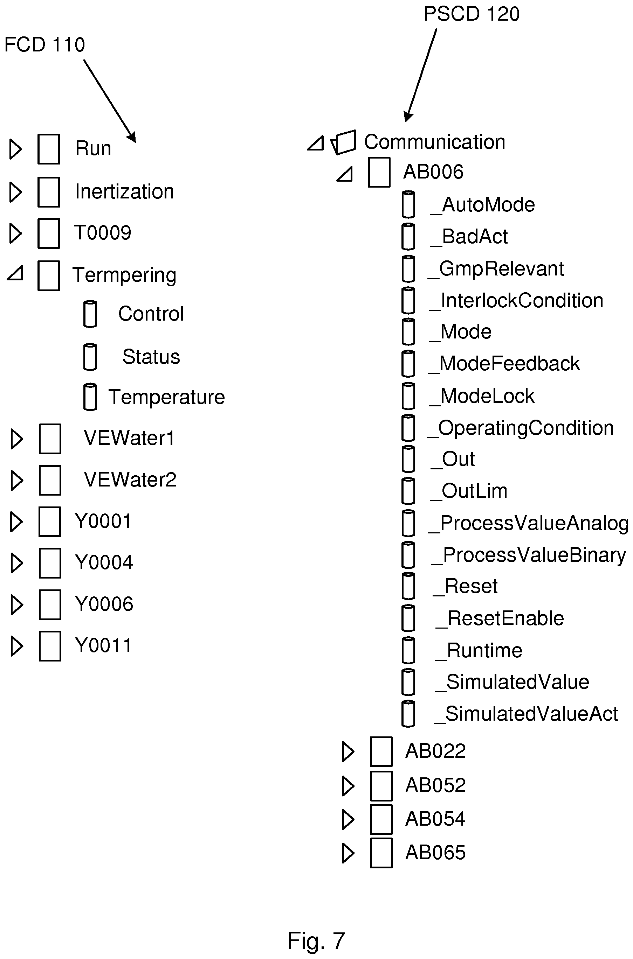

Based on the received target system selection, the system communication structure unit 58 may determine a target system dependent communication structure, step 230. This may involve generating process function communication definitions FCD 110, for instance in the form of computer objects, based on the process function information 7oand generating process structure communication definitions PSCD 120 based on the process structure definitions 100, see fig. 7 and 8. For every process function and the used process function parameters, a communication object that aims on the corresponding target system dependent variables and structure may be created. In fig. 7 it can be seen that communication object Run, Inertization and Tempering are created together with a number of further objects associated with other functions, all of which are specific to the selected target system, which may be the system of a certain vendor. The user only has to select the target system and the communication structure is automatically defined. Also the variables are defined in the communication structure, something that is shown for the Tempering function.

Besides the communication variables for the process functions, for every used equipment from the process structure, a communication object is created in the process structure communication definition 120, as well. For every piece of equipment in the process structure definition, the communication interface generating unit selects a corresponding piece of equipment or machine of the selected vendor. Depending on the type of process equipment, corresponding communication variables associated with the machine may also be automatically created in the communication structure as variables that correspond to the target automation system variable.

The communication interface generating unit 58 generates at least one interfacing object that provides the target systems interface code of the target system, step 235, i.e. the computer code that is used for interacting with the other modules and overall control module of the process control system. For the target system the interface code is generated through an interface code object 122. The target system has to provide the required interfaces in order to be seamlessly integrated into the higher level process control system.

In order to provide the required interfaces of the interfacing object, the communication interface generating unit 58 creates from the process function information 70, for each process function a corresponding interface in the module automation system, step 240. Moreover, for each process function parameter, a corresponding variable for the process function is created. Furthermore, the defined interlock code may be translated into the target system specific programming language and being inserted as a function block or PLC program 124.

Furthermore, the state machine generating unit 62 creates state machines SM 126, step 250. In order to get a feedback of the current status of a process function in the higher level process control system, a state machine that creates the current status of a process function is automatically generated for the target system. For each process function, a state machine 126 is created in the target system specific programming language. For each state machine 126, a control and a status parameter is inserted that is exposed in the module interfaces F1, ... Fn in order to have the possibility to send commands from higher level process control and receive feedback about the execute of the process function. Also the user provided parameters are inserted, such as the parameter Temperature for the Tempering function. The state machine might be compliant with IEC 61512, ISA 88 or ISA 106 state machine, but might also implement process function specifics or reduced versions of the described standards.

Thereafter the equipment control block generating unit 64 creates equipment control blocks, step 260. Here, for each piece of equipment that is defined in the process structure, a control block (function block, control module, function, etc.) is automatically created in the target system control object 132. These control blocks can later be connected manually in the target systems engineering environment to create the actual process function.

The steps 230 - 260 are schematically indicated in the lower part of fig. 8. These steps are performed for a target system engineering tool, but from the middleware and not requiring any manual interaction with the target system engineering tool. The generated code is automatically inserted in the engineering tools, as well as the equipment control blocks. The generation of a visualization is not necessary, because the visualization will be done by the higher level process control system and not the module automation system.

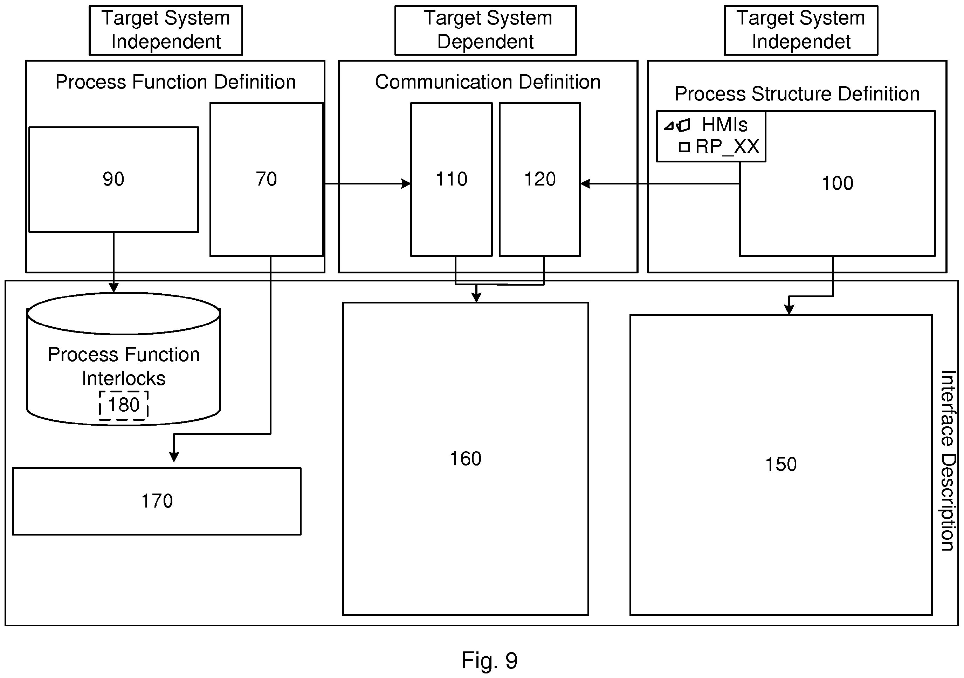

The second group of the previously mentioned activities will now be described with reference being made to fig. 9 - 13.

After the interface object 122 comprising the module interfaces has been generated, it is then possible that the interface description generating unit 66 generates an interface description for the automation system, step 270. For the generation of the interface description of the automation system, the results from Steps 200 - 230 may be reused. Thus, there is no manual interaction required to create the description files.

As can be seen in fig. 9, the interface description may comprise a process function section 170, a communication section 160 and a process structure section 150. Here the process function definition 110 and the process structure communication definition 120 are taken and inserted in the communication section 160. Additionally, the process function parameters are included in the description in function section 170. Since for every function, target system dependent communication objects already exist, those are thus inserted in the interface description, as well.

If there are interlocks that have to be known by the process control system, those are assigned to every process function and stored in an interlocks storage 180 in the standard description format for this purpose. This might be PLCOpenXml or a similar format.

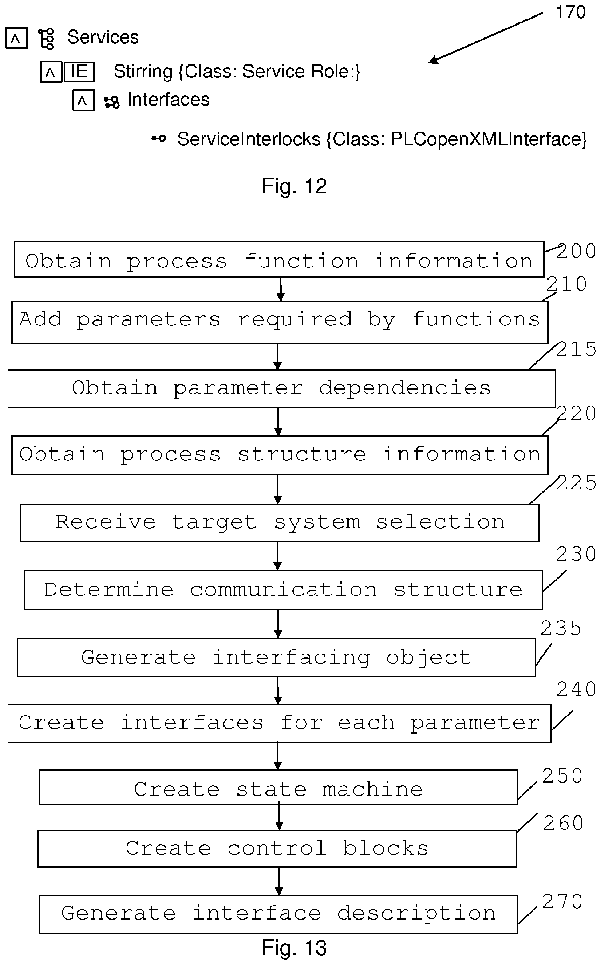

The interlocks may also be stored together with the function definitions in the function section 170 of the Interface description, which is shown in fig. 12.

After the description of the process functions, a visualization description 150 is generated from the process structure definition. The process structure definition includes all necessary information to create for each process equipment and object of the specific type.

Furthermore, the coordinates of the equipment on the screen and the connections between the objects are included in the interface description. These are stored and can later be used to re-create visualization in the process control system for the specific module.

Since the process control systems visualization needs a dynamic connection to the process equipment control blocks from the module automation system, for each equipment used in the process structure definition, a communication object is inserted in the communication structure of the interface description. The variables used for the visualization of the equipment and the corresponding path to access the variable on the module automation system are inserted, as well. Figure 9 summarizes the creation of the interface description of the module automation system.

By the automatic creation of the interface of the module automation system and the automatic creation of the interface description of the module automation, compliance between the automation system and the description of the interfaces is given. Both are as well compliant to the standard, since the standard is applied inside the middleware. Thus, a target system independent method is described, which is able to create target system specific interfaces and code and the corresponding description of it according to a standardized format, which as an example be VDI 2658.

It can thereby be seen that the invention provides a middleware that allows module vendors to describe the predecessor-successor relationship of equipment, without having to fully describe the visualization that is later imported and changed in the overlaying process control system. Thus, a middleware, that is easy to use, only provides the necessary feature for the user or module engineer and that ensures interface compliance is provided.

The described interface conformity ensuring device was above described as being used for the basic process control functions. It is envisaged that it may be enhanced with further functions used to describe safety, security, electrification automation etc.

It is also possible to create interfaces to forward Key Performance Indicators (KPIs), such as module throughput, running hours of pump, etc., for the module to the process control system. Process control could therefore be handled using the KPIs instead of equipment control.

A further addition could be to include a separate interface description for contacting the maintenance personal of the module. E.g. there could be "public" interfaces that are able to communicate via Virtual Private Network (VPN) with the module owner of manufactured in case maintenance is needed.

Another addition could be to extend the method to be able to read in interface description and configure dependencies between module types.

Moreover, from the process structure, simulation models could be automatically created that are usable for virtual commissioning.

From the process structure, interlocks between the process equipment could be automatically generated as e.g. IEC61131-3 code. E.g. if it is configured (recognized) that in front of a pump, there is a valve, the pump could be automatically interlocked with the valves opening position.

The interface conformity ensuring device may, as was previously mentioned, be provided in the form of one or more processors together with computer program memory including computer program code for performing its functions. This computer program code may also be provided on one or more data carriers which perform the functionality of the problem investigating device when the program code is being loaded into a computer forming the problem investigating device. One such data carrier 300 with the previously mentioned computer program code 50, in the form of a CD ROM disc, is schematically shown in fig. 14. Such a computer program may as an alternative be provided on another server and downloaded therefrom into the problem investigating device.

## Claims

1. An interface conformity ensuring device (44) for a process control system (10) that is to comprise different modules for controlling different process control system sections (S1, S2, S3), the interface conformity ensuring device (44) being configured to:
- obtain, from a user, information (70) of process functions required in a process control module,
- add parameters required by the functions,
- obtain, from the user, a selection of process structure elements (100) to be visualized by the module during control of the process control section,
- receive, from the user, a selection of a target system,
- create, based on the target system selection, control blocks for the equipment in the process structure, and
- generate at least one interfacing object (122) aimed at the target system comprising a number of communication interfaces (F1, ... Fn) corresponding to the function parameters and control blocks.

2. The interface conformity ensuring device (44) according to claim 1, which when being configured to generate at least one communication object is further configured to generate an interface for each parameter of each function.

3. The interface conformity ensuring device according to claim 2, wherein each process comprises a Control parameter and a Status parameter and the interface conformity ensuring device , is further configured to create, for each process function, a state machine(126) for the target system based on the Control and Status parameters and to insert said state machine in said at least one communication object.

4. The interface conformity ensuring device according to any previous claim, being further configured to obtain information about interlocks (90) from the user and insert interlock data (124) concerning said interlocks in said at least one communication object (122).

5. The interface conformity ensuring device according to any previous claim, being further configured to determine, based on the target system selection, a target system dependent function definition (110) comprising a description of the process functions with added parameters and a target system dependent process structure definition (120) comprising a description of the process structure elements and control blocks.

6. The interface conformity ensuring device according to claim 5, being further configured to generate an automation system interface description comprising a communication section (160) that is based on the target system dependent function definition (110) and the target system dependent process structure definition (120), comprising a function section (170) that is based on the process functions with added parameters (70) and comprising a process structure section (150) that is based on the process structure elements and control blocks.

7. The interface conformity ensuring device according to claim 6 when depending on claim 4, wherein the function section is further based on said obtained interlock information (90) from the user and insert said interlock data (180)in said at least one communication object.

8. A method for ensuring interface conformity of a process control module to be provided for controlling a process control system section (S1), the method being performed by an interface conformity ensuring device (44) and comprising:
- obtaining (200), from a user, information (70) of process functions required in a process control module,
- adding (210) parameters required by the functions,
- obtaining (220), from the user, a selection of process structure elements (100) to be visualized by the module during control of the process control section,
- receiving(225), from the user, a selection of a target system,
- creating (260), based on the target system selection, control blocks for the equipment in the process structure, and
- generating (235) at least one interfacing object (122) aimed at the target system comprising a number of communication interfaces (F1, ... Fn) corresponding to the function parameters and control blocks.

9. The method according to claim 8, further comprising generating (240) an interface for each parameter of each function.

10. The method according to claim 8 or 9, wherein each process comprises a Control parameter and a Status parameter and further comprising creating (250), for each process function, a state machine (126) for the target system based on the Control and Status parameters and inserting said state machine in said at least one communication object.

11. The method according to any of claims 8-10, further comprising obtaining (215) information about interlocks (90) from the user and inserting interlock data concerning said interlocks in said at least one communication object (122).

12. The method according to any of claims 8 - 11, further comprising determining (230), based on the target system selection, a target system dependent function definition (110) comprising a description of the process functions with added parameters and a target system dependent process structure definition (120) comprising a description of the process structure elements and control blocks.

13. The method according to claim 12, further comprising generating (270) an automation system interface description comprising a communication section (160) that is based on the target system dependent function definition (110) and the target system dependent process structure definition (120), comprising a function section (170) that is based on the process functions with added parameters (70) and comprising a process structure section (150) that is based on the process structure elements and control blocks.

14. A computer program product for ensuring interface conformity of a process control module to be provided for controlling a process control system section (S1), said computer program product being provided on a data carrier (300) comprising computer program code (50) configured to cause an interface conformity ensuring device (44) to, when said computer program code is loaded into said interface conformity ensuring device (44),
- obtain, from a user, information (70) of process functions required in a process control module,
- add parameters required by the functions,
- obtain, from the user, a selection of process structure elements (100) to be visualized by the module during control of the process control section,
- receive, from the user, a selection of a target system,
- create, based on the target system selection, control blocks for the equipment in the process structure, and
- generate at least one interfacing object (122) aimed at the target system comprising a number of communication interfaces (F1, ... Fn) corresponding to the function parameters and control blocks.
